Europäisches Patentamt

European Patent Office

Office européen des brevets

(19)

(11) Veröffentlichungsnummer: **0 113 893**
**B1**

# EUROPÄISCHE PATENTSCHRIFT

(12)

(45) Veröffentlichungstag der Patentschrift:
04.02.87

(21) Anmeldenummer: 83112662.8

(22) Anmeldetag: 15.12.83

(51) Int. Cl.⁴: **F 16 B 13/02**

(54) **Kunststoff-Spreizdübel.**

(30) Priorität: 16.12.82 DE 3246688

(43) Veröffentlichungstag der Anmeldung:
25.07.84 Patentblatt 84/30

(45) Bekanntmachung des Hinweises auf die Patenterteilung:
04.02.87 Patentblatt 87/6

(84) Benannte Vertragsstaaten:
AT CH FR GB LI SE

(56) Entgegenhaltungen:
DE-A-1 750 110
DE-C-1 253 959
DE-U-1 944 573
DE-U-8 003 978
FR-A-2 109 244
US-A-1 599 784
US-A-1 751 818

INDUSTRIE ANZEIGER, Band 93, Nr. 96, 16.
November 1971 "Gewindedübel", Seite 2390

(73) Patentinhaber: HILTI Aktiengesellschaft, FL- 9494
Schaan (LI)

(72) Erfinder: Bisping, Heinz, Feichtmayrstrasse 15,
D-8000 München 50 (DE)
Erfinder: Hoffmann, Armin, Luitpoldstrasse 13,
D-8034 Germering (DE)

(74) Vertreter: Wildi, Roland, Hilti Aktiengesellschaft
Patentabteilung, FL- 9490 Schaan (LI)

## Beschreibung

Die Erfindung betrifft einen Kunststoff-Spreizdübel mit im wesentlichen zylinderförmigem, teilweise radial aufweitbarem Dübelkörper mit sich teilweise zum vorderen Ende verengender Aufnahmeöffnung für ein Spreizelement, wobei der Dübelkörper in seinem rückwärtigen Bereich mehrere in Längsrichtung verlaufende, sich zum vorderen Ende im Querschnitt verjüngende Aussenrippen, mehrere in Längsrichtung verlaufende Innenrippen, sowie mehrere vom rückwärtigen Ende ausgehende Längsschlitze aufweist und die Innenrippen an der Wandung des Dübelkörpers Aussenrippen gegenüberliegend angeordnet sind.

Wegen ihrer Vorteile, wie geringe Material- und Herstellungskosten, hohe Verankerungswerte, sowie gute Beständigkeit gegen Feuchtigkeit und andere chemische Einflüsse, werden Kunststoffdübel heute für viele Zwecke angewendet. Bei vielen Anwendungen erfolgt dies nach der sogenannten Durchsteckmontage, d.h. der Dübel wird durch das zu befestigende Teil hindurch in eine Bohrung des Aufnahmematerials eingeführt. Für eine rationelle Montage ist es erforderlich, dass der Dübel zusammen mit dem vorzugsweise als Schraube ausgebildeten Spreizelement als vormontierte Einheit ins Bohrloch eingeführt werden kann.

Diese Einheit wird in der Praxis meist mittels Hammerschlägen auf den Schraubenkopf durch das zu befestigende Teil in das Aufnahmematerial eingetrieben. Dabei kommt es bei den bekannten Spreizdübeln oft vor, dass die Schraube in den Spreizdübel eindringt, und dieser somit vorzeitig aufgeweitet wird. Dadurch wird das vollständige Einsetzen des Dübels in das Aufnahmematerial verhindert. Eine Folge davon sind ungenügende Verankerungswerte. Daneben kann oft auch die Schraube nicht bis zur Anlage des Schraubenkopfes an das zu befestigende Teil eingedreht werden, so dass dieses nicht gegen das Aufnahmematerial gezogen wird.

Der Versuch, bei den bekannten Dübeln ein Eindringen der Spreizschraube in den Dübelkörper durch eine Verbindung unter begrenztem Einschrauben der Spreizschraube in den Dübelkörper zu verhindern, scheitert daran, dass dadurch bereits ein teilweises radiales Aufweiten erfolgt. Dadurch wird das Einsetzen des Dübels in eine Aufnahmebohrung erschwert oder gar verunmöglicht.

Ein bekannter SpreizdübelDE-C-1 253 959 weist in seinem rückwärtigen Bereich vier in Längsrichtung verlaufende Aussenrippen, zwei ebenfalls in Längsrichtung verlaufende Innenrippen sowie zwei vom rückwärtigen Ende ausgehende Längsschlitze auf. Die Innenrippen dienen der Erhöhung der Uebertragung radialer Druckkräfte von der Spreizschraube auf die Aussenrippen. Die Längsschlitze sollen eine Verringerung der Steifigkeit des rückwärtigen Bereiches des Dübelkörpers bewirken. Da diese Längsschlitze im Bereich der an der Wandung des Dübelkörpers einander gegenüberliegenden Innen- und Aussenrippen angeordnet sind, wird der Dübelkörper in seinem rückwärtigen Bereich praktisch in zwei Halbschalen unterteilt. Diese Schalen sind in sich immer noch derart steif, dass das Vormontieren des Dübelkörpers mit einer Spreizschraube auch bei diesem Dübel problematisch ist.

Der Erfindung liegt die Aufgabe zugrunde, einen sich sowohl für die Durchsteckmontage als auch für alle übrigen Anwendungsfälle eignenden Spreizdübel zu schaffen.

Gemäss der Erfindung wird dies durch die Kombination der nachstehenden Merkmale erreicht:

a) die Anzahl der Innenrippen entspricht derjenigen der Aussenrippen,

b) die Anzahl der Längsschlitze entspricht derjenigen der Aussenrippen,

c) die Innenrippen sind gegen das rückwärtige Ende des Dübelkörpers verjüngt ausgebildet,

d) die Längsschlitze sind gegenüber den Aussen- bzw. Innenrippen um eine halbe Teilung radial versetzt angeordnet.

Durch die erfindungsgemässe Kombination ist der Dübelkörper in seinem rückwärtigen Bereich ausreichend elastisch und kann ähnlich einer Schnappverbindung auf eine Spreizschraube aufgesteckt werden. Dabei wird die Spreizschraube vorzugsweise so weit in den Dübelkörper eingeführt, bis sie in dem sich verengenden Bereich der Aufnahmeöffnung zur Anlage kommt. Durch eine geringe Teildrehung der Spreizschraube kann diese mit dem Dübelkörper fest verbunden werden. Beim Einsetzen des derart vormontierten Dübels in eine etwa dem Aussendurchmesser des Dübelkörpers entsprechende Bohrung werden die den Dübelkörper radial überragenden Aussenrippen durch die Anlage an der Bohrlochwandung radial gegen innen gedrückt. Durch die infolge der Längsschlitze elastische Dübelwandung werden somit die Innenrippen gegen das Gewinde der Spreizschraube gepresst. Dabei kann das Profil der Spreizschraube in das weichere Material der Innenrippen des Spreizdübels eingeformt werden. Somit entsteht ein Formschluss zwischen dem Dübelkörper und der Spreizschraube, welche eine Relativverschiebung beim Einschlagen der vormontierten Einheit verhindert. Dadurch wird der Dübelkörper nicht vorzeitig aufgespreizt.

Durch die Längsschlitze entstehen im rückwärtigen Bereich des Dübelkörpers elastische Klemmbacken, welche ähnlich einer Spannzange in radialer Richtung verformbar sind. Durch die an der Wandung einander gegenüberliegenden Aussen- bzw Innenrippen wird die Steifigkeit dieser Klemmbacken erhöht. Damit die Klemmbacken genügend elastisch verformbar sind, ist es zweckmässig, dass die Längsschlitze um das 0,1- bis 0,3-fache des Dübelkörper-Aussendurchmessers länger sind als die Innenrippen. Durch die gegenüber den Innenrippen längeren Längsschlitze entsteht in dem an das vordere Ende der Innenrippen anschliessenden Bereich eine Schwächungsstelle und somit praktisch ein Gelenk.

Für das Einstecken der Spreizschraube in den Dübelkörper sind vorteilhaft die Innenrippen gegenüber dem rückwärtigen Ende des Dübelkörpers um das 0,1- bis 0,2-fache des Dübelkörper-Aussendurchmessers nach vorne versetzt angeordnet. Somit wird die Spreizschraube durch die in diesem Bereich vorzugsweise zylindrische oder sich geringfügig zum vorderen Ende verengende Aufnahmeöffnung zentriert. Ein schräges Ansetzen der Spreizschraube und ein sich daraus ergebendes Ausknicken beim Eintreiben der aus dem Dübelkörper und der Spreizschraube vormontierten Einheit wird somit verhindert. Erfolgt keine Durchsteckmontage, so bilden die Innenrippen einen axialen Anschlag beim Einschieben des Dübelkörpers in das Bohrloch des Aufnahmematerials, wobei sich auch bei diesem Anwendungsfall die durch die Versetzung der Innenrippen erzielte Zentrierwirkung vorteilhaft auswirkt.

Die Anzahl der Aussen- bzw Innenrippen sowie der Längsschlitze kann innerhalb gewisser Grenzen frei gewählt werden. Aus herstellungstechnischen Gründen ist es jedoch vorteilhaft, wenn der Dübelkörper vier Aussenrippen, vier Innenrippen sowie vier Längsschlitze aufweist. Eine solche Ausbildung ermöglicht ein relativ einfaches Spritzwerkzeug und hat sich für die Funktion vollauf als genügend erwiesen.

Die Erfindung soll nachstehend anhand der sie beispielsweise wiedergebenden Zeichnungen näher erläutert werden. Es zeigen:

Fig. 1 einen erfindungsgemässen Spreizdübel, im Längsschnitt,

Fig. 2 eine stirnseitige Ansicht des in Fig. 1 dargestellten Spreizdübels,

Fig. 3 eine aus einem erfindungsgemässen Spreizdübel nach Fig. 1 und 2 sowie einer Spreizschraube bestehende vormontierte Einheit.

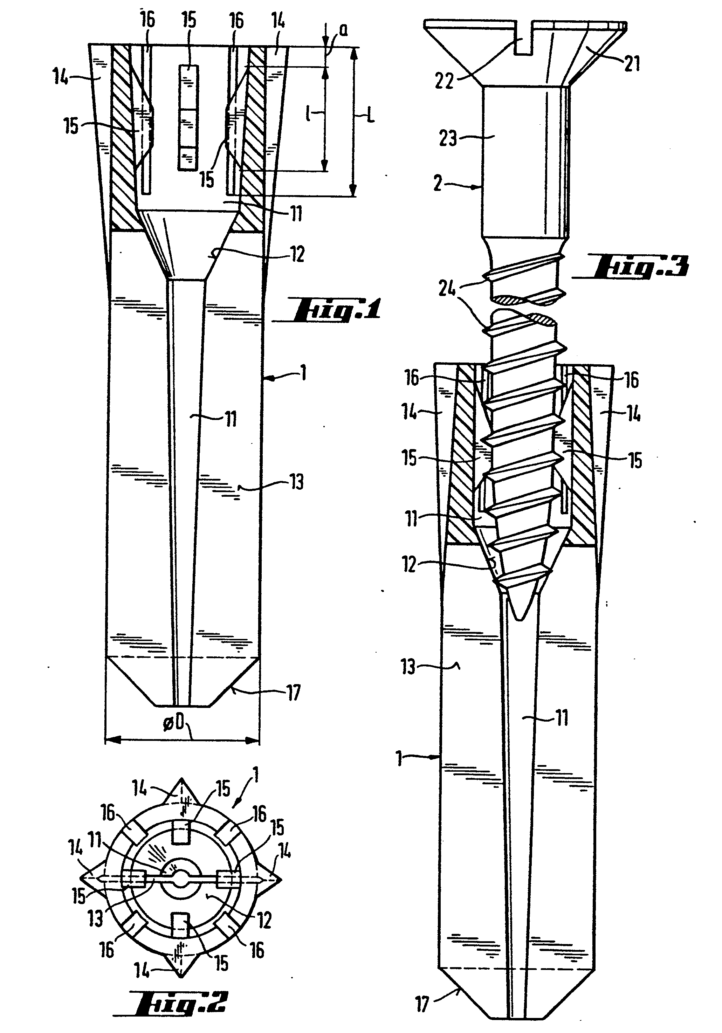

Der aus den Figuren 1 bis 3 ersichtliche, im wesentlichen zylinderförmige, insgesamt mit 1 bezeichnete Dübelkörper ist mit einer zentralen, sich über die gesamte Länge des Dübelkörpers erstreckenden Aufnahmeöffnung 11 für ein Spreizelement versehen. Diese Aufnahmeöffnung 11 weist im rückwärtigen Bereich eine Verengung 12 auf. Zur Aufweitbarkeit des Dübelkörpers 1 ist dieser mit einem vom vorderen Ende ausgehenden, sich über einen Grossteil der Länge des Dübelkörpers 1 erstreckenden Schlitz 13 versehen. Im rückwärtigen Bereich des Dübelkörpers 1 sind an der Aussenseite in Längsrichtung verlaufende Aussenrippen 14 angeordnet. Die Aussenrippen 14 weisen einen sich gegen das vordere Ende des Dübelkörpers 1 verjüngenden Querschnitt auf. Der Dübelkörper 1 weist ferner vier in axialer Richtung verlaufende, in die Aufnahmeöffnung 11 ragende Innenrippen 15 auf. Die Aussenrippen 14 und die Innenrippen 15 sind einander an der Wandung des Dübelkörpers 1 jeweils gegenüberliegend angeordnet. Der Dübelkörper 1 ist ausserdem mit vom rückwärtigen Ende ausgehenden Längsschlitzen 16 versehen. Diese Längsschlitze 16 sind gegenüber den Aussen- bzw Innenrippen 14 bzw 15 jeweils um etwa eine halbe Teilung radial versetzt angeordnet und dienen dazu, die radiale Verformbarkeit des Dübelkörpers 1 zu ermöglichen. Die axiale Länge L ist etwa um das 0,2-fa-che grösser als die Länge 1 der Innenrippen 15. Durch diese Massnahme entsteht am vorderen Ende der Innenrippen 15 eine Querschnittsschwächung, wodurch die radiale Verformbarkeit der durch die Längsschlitze 16 gebildeten Segmente noch verbessert wird. Die Innenrippen 15 sind ausserdem gegenüber dem rückwärtigen Ende des Dübelkörpers 1 um das Mass a, welches etwa das 0,1-fache des Dübelkörper-Aussendurchmessers D beträgt, nach vorne versetzt angeordnet. Durch diese Massnahme wird ein etwa zylindrischer Führungsbereich der Aufnahmeöffnung 11 für ein Spreizelement geschaffen und das Einsetzen eines Spreizelementes in den Dübelkörper 1 somit vereinfacht. Der Dübelkörper 1 ist an seinem vorderen Ende ferner mit einer Anfasung 17 versehen, welche das Einführen des Dübelkörpers 1 in ein Bohrloch erleichtert.

In Fig. 3 ist eine insgesamt mit 2 bezeichnete Spreizschraube in den Dübelkörper 1 eingesetzt. Die Spreizschraube weist beispielsweise einen Senkkopf 21 mit einem Schraubenzieherschlitz 22 auf. Der Schaft 23 der Spreizschraube 2 ist im vorderen Bereich mit einem Gewinde 24 versehen. Das Gewinde 24 ist vorzugsweise als sogenanntes Holzschraubengewinde ausgebildet. Für die Durchsteckmontage wird die Spreizschraube 2 unter radialer Aufweitung des Dübelkörpers 1 so weit in diesen eingesteckt, bis das Gewinde 24 im Bereich der Verengung 12 zur Anlage kommt. Dabei greifen die Innenrippen 15 teilweise in das Gewinde 24 der Spreizschraube 2 ein. Beim vorzugsweise durch Schläge auf den Senkkopf 21 erfolgenden Einführen der Montageeinheit in ein nicht dargestelltes Bohrloch erden die den Dübelkörper radial überragenden Aussenrippen 14 und damit auch die den Aussenrippen 14 gegenüberliegend angeordneten Innenrippen 15 von der Bohrungswand radial nach innen gegen den Schaft 23 bzw gegen das Gewinde 24 der Spreizschraube 2 gepresst. Das Gewinde 24 formt sich nun völlig in die Innenrippen 15 ein. Dadurch wird eine Relativverschiebung der Spreizschraube 2 gegenüber dem Dübelkörper 1 und somit auch ein vorzeitiges, das weitere Einführen des Dübelkörpers 1 in das Aufnahmematerial beeinträchtigendes Aufweiten des Dübelkörpers 1 im Spreizbereich verhindert. Wenn die, durch die Spreizschraube 2 aufgeweiteten Aussenrippen 14 das zu befestigende Bauteil (zB. Holzlatte) durchdrungen haben und den Bohrlochrand erreichen, macht sich dies durch ein Ansteigen des Eintreibwiderstandes bemerkbar. Hierauf kann die Spreizschraube 2 unter Aufweitung desselben weiter in den Dübelkörper 1 eingeschraubt und dieser somit im Aufnahmematerial durch den entstehenden Spreizdruck verankert werden. Ferner kann durch das weitere Einschrauben der Spreizschraube 2 das zu befestigende Bauteil gegen das Aufnahmematerial gezogen werden.

**Patentansprüche**

1. Kunststoff-Spreizdübel mit im wesentlichen zylinderformigem, teilweise radial aufweitbarem Dübelkörper (1) mit sich teilweise zum vorderen Ende verengender Aufnahmeöffnung (11) für ein Spreizelement (2), wobei der Dübelkörper (1) in seinem rückwärtigen Bereich mehrere in Längsrichtung verlaufende, sich zum vorderen Ende im Querschnitt verjüngende Aussenrippen (14), mehrere in Längsrichtung verlaufende Innenrippen (15) sowie mehrere vom rückwärtigen Ende ausgehende Längsschlitze (16) aufweist und die Innenrippen (15) an der Wandung des Dübelkörpers (1) Aussenrippen (14) gegenüberliegend angeordnet sind, gekennzeichnet durch die Kombination der nachstehenden Merkmale:
a) die Anzahl der Innenripppen (15) entspricht derjenigen der Aussenrippen (14),
b) die Anzahl der Längsschlitze (16) entspricht derjenigen der Aussenrippen (14),
c) die Innenrippen (15) sind gegen das rückwärtige Ende des Dübelkörpers (1) verjüngt ausgebildet,
d) die Längsschlitze (16) sind gegenüber den Aussen-(14) bzw. Innenrippen (15) um eine halbe Teilung radial versetzt angeordnet.

2. Spreizdübel nach Anspruch 1, dadurch gekennzeichnet, dass die Längsschlitze (16) um das 0.1- bis 0.3-fache des Dübelkörper-Aussendurchmessers (D) länger sind als die Innenrippen (15).

3. Spreizdübel nach einem der Ansprüche 1 oder 2, dadurch gekennzeichnet, dass die Innenrippen (15) gegenüber dem rückwärtigen Ende des Dübelkörpers (1) um das 0.1- bis 0.2-fache des Dübelkörper-Aussendurchmessers (D) nach vorne versetzt angeordnet sind.

4. Spreizdübel nach Anspruch 1, dadurch gekennzeichnet, dass der Dübelkörper (1) vier Aussenrippen (14), vier Innenrippen (15) sowie vier Längsschlitze (16) aufweist.

**Claims**

1. A plastics expansible dowel with a substantially cylindrical partially radially-expansible dowel body (1) having a reception aperture (11), partially narrowing to the front end, for an expansion element (2), in which the dowel body (1) has, in its rearward region, several external (14) extending in the longitudinal direction and tapering in cross-section towards the front end, several internal ribs (15) extending in the longitudial direction, as well as several longitudinal slots (16) emanating from the rearward end, and the internel ribs (15) are arranged on the well of the dowel body (1) so as to lie opposite to external ribs (14), characterised by the combination of the following features:
(a) the number of the internal ribs (15) corresponds to that of the external ribs (14),
(b) the number of the longitudinal slots (16) corresponds to that of the external ribs (14),
(c) the internal ribs (15) are designed tapered towards the rearward end of the dowel,
(d) the longtudinal slots (16) are arranged offset radially, by half a graduation relative to the external ribs (14) or internal ribs (15) respectively.

2. An expansible dowel according to claim 1, characterised in that the longitudinal slots (16) are longer to the internal ribs (15) by 0.1 to 0.3 times the outside diameter (D) of the dowel body.

3. A expansible dowel according to one of claims 1 or 2, characterised in that the internal ribs (15) are arranged offset fforwardly relative to the rearward end of the dowel body (1) by 0.1 to 0.2 times the outside diameter (D) of the dowel body.

4. An expansible dowel according to claim 1, characterised in that the dowel body (1) has four external ribs (14), four internal ribs (15) as well as four longitudinal slots (16).

**Revendications**

1. Cheville expansible en plastique avec un corps de cheville essentiellement cylindrique expansible en partie radialement (1) avec une ouverture réceptrice se rétrécissant partiellement vers l'extrémité avant (11) pour recevoir un élément d'expansion (2), le corps de cheville (1) comportant à sa partie arrière plusieurs nervures extérieures (14), dirigées dans le sens longitudinal, de section transversale se réduisant vers l'extrémité avant, plusieurs nervures intérieures (15), dirigées dans le sens longitudinal, et plusieurs rainures longitudinales (16) partant de l'extrémité arrière, les nervures intérieures (15) étant disposées sur la paroi du corps de cheville (1), à l'opposé des nervures extérieures (14), caractérisée par la combinaison des caractéristiques suivantes:
a) le nombre de nervures intérieures (15) correspond à celui des nervures extérieures (14),
b) le nombre de rainures longitudinales (16) correspond à celui des nervures extérieures (14),
c) les nervures intérieures (15) sont amincies vers l'extrémité arrière du corps de cheville (1),
d) les rainures longitudinales (16) sont décalées radialement d'une demi-division par rapport aux rainures extérieures (14) et respectivement aux rainures intérieures (15).

2. Cheville expansible selon la revendication 1, caractérisée par le fait que les rainures longitudinales (16) ont une longueur supérieure de 0,1 à 0,3 fois le diamètre extérieur du corps de cheville (D) à celle des nervures intérieures (15).

3. Cheville expansible selon l'une des revendications 1 ou 2, caractérisée par le fait que les nervures intérieures (15) sont décalées vers l'avant de 0,1 à 0,2 fois le diamètre extérieur du corps de cheville (D) par rapport à l'extrémité arrière du corps de cheville (1).

4. Cheville expansible selon la revendication 1, caractérisée par le fait que le corps de cheville (1) comporte quatre nervures extérieures (14), quatre nervures intérieures (15) ainsi que quatre rainures longitudinales (16).

Fig.1

Fig.2

Fig.3